(19) Europäisches Patentamt / European Patent Office / Office européen des brevets

(11) **EP 1 945 401 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**28.12.2016 Patentblatt 2016/52**

(45) Hinweis auf die Patenterteilung:
**04.04.2012 Patentblatt 2012/14**

(21) Anmeldenummer: **06777003.2**

(22) Anmeldetag: **21.08.2006**

(51) Int Cl.:
***B23K 26/06*** *(2006.01)*   ***B23K 26/38*** *(2014.01)*

(86) Internationale Anmeldenummer:
**PCT/EP2006/008225**

(87) Internationale Veröffentlichungsnummer:
**WO 2007/022948 (01.03.2007 Gazette 2007/09)**

(54) **VORRICHTUNG UND VERFAHREN ZUR MATERIALTRENNUNG MIT LASERPULSEN, MIT ENERGIE EINES LASERPULS KLEINER ALS DIE ENERGIE EINES LASERPULS ZUM ERZEUGEN EINER MATERIALTRENNUNG**

DEVICE AND METHOD FOR MATERIAL SEPARATION USING LASER PULSES, THE ENERGY OF ONE OF WHICH IS LESS THAN THE ENERGY OF A LASER PULSE USED FOR SEPARATING MATERIAL

DISPOSITIF ET METHODE POUR SEPARER UN MATERIEL, UTILISANT UN LASER PULSE, L'ENERGIE D'UN PULSE ETANT INFERIEURE A L'ENERGIE D'UN PULSE NECESSAIRE POUR SEPARER LE MATERIEL

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.08.2005 DE 102005039833**

(43) Veröffentlichungstag der Anmeldung:
**23.07.2008 Patentblatt 2008/30**

(73) Patentinhaber: **Rowiak GmbH**
**30419 Hannover (DE)**

(72) Erfinder:
• **LUBATSCHOWSKI, Holger**
**30989 Gehrden (DE)**
• **RIPKEN, Tammo**
**31515 Wunstorf (DE)**
• **RATHJEN, Christian**
**28197 Bremen (DE)**

(74) Vertreter: **Eisenführ Speiser**
**Patentanwälte Rechtsanwälte PartGmbB**
**Johannes-Brahms-Platz 1**
**20355 Hamburg (DE)**

(56) Entgegenhaltungen:
| | |
|---|---|
| EP-A- 1 338 371 | WO-A-2006/018370 |
| DE-B3- 10 250 015 | GB-A- 2 218 660 |
| US-A- 3 527 198 | US-A- 5 786 560 |
| US-A- 5 882 572 | US-A1- 2001 035 447 |
| US-A1- 2001 035 447 | US-A1- 2002 190 435 |
| US-B1- 6 509 547 | US-B2- 6 787 733 |

EP 1 945 401 B2

**Beschreibung**

Die Erfindung betrifft ein Verfahren und eine Vorrichtung zur Materialtrennung mittels eines Lasers gemäß dem Oberbegriff des Anspruch I und II (siehe z. B. US 6 787 733).

Die Anwendung von Laserpulsen, insbesondere ultrakurzen Laserpulsen mit einer Laserpulsdauer im Bereich zwischen ungefähr $10^{-15}$ s und $5 \times 10^{-10}$ s zum Zwecke hochpräziser Laser-Mikrostrukturierungen ist bekannt.

G. Mourou beschreibt in US 5,656,186 (EP 0 754 103 B1, Anmeldetag 8.4.94 "Method for controlling configuration of laser induced breakdown and ablation") die grundsätzliche Eignung einzelner ultrakurzer Laserpulse für die Materialbearbeitung.

S. Nolte setzt sich in seiner Dissertation zur "Mikromaterialbearbeitung mit ultrakurzen Laserpulsen", Cuvillier Verlag Göttingen, 1999 mit Aspekten der Materialbearbeitung unter Einsatz von Femtosekunden-Laserpulsen auseinander.

Allgemein, d. h. auch im Rahmen der vorliegenden Erfindung, lassen sich ultrakurze Laserpulse zum Schneiden, zum Abtragen und Strukturieren von Material (z. B. metallischen Werkstoffen), zum Abtragen und Strukturieren und zum Ändern von Materialeigenschaften (z. B. der Änderung von Brechungsindizes in Glas) einsetzen.

Die besonderen Vorteile der Materialbearbeitung mit ultrakurzen Laserpulsen (fs-Laserpulsen) zeigen sich insbesondere beim äußerst präzisen und sowohl thermisch als auch mechanisch weniger schädigenden Schneiden und/oder Abtragen von Materialien als bei einer Reihe anderer Materialbearbeitungsverfahren. Durch Fokussieren der ultrakurzen Laserpulse wird im Fokus auf sehr begrenztem Raum durch Zünden eines Mikroplasmas Energie deponiert und durch sog. Photodisruption eine Schnittwirkung bzw. Material-Ablation erreicht. Es lassen sich Abtragraten im sub-$\mu$m-Bereich mit Schnittbreiten von weniger als 500 nm erreichen. Aufgrund eines nicht-linearen Wechselwirkungsmechanismus bei der Photodisruption ist der Materialabtrag dabei weitgehend unabhängig von den Materialeigenschaften. Insbesondere können unter Einsatz von fs-Laserpulsen auch Materialien mit hoher Wärmeleitung (wie z. B. Metalle) und Materialien mit geringer Laser-Lichtabsorption (wie z. B. Polymere) bearbeitet werden.

Ein Problem bei der Materialbearbeitung mittels Laser besteht darin, dass durch die Laserenergie im bestrahlten Bereich eine Materialtrennung erzielt wird und darüber hinaus in angrenzenden Bereichen Materialveränderungen verursacht werden, die in der Regel unerwünscht sind. Diese Materialveränderungen hängen maßgeblich in Ausmaß und Stärke davon ab, wie hoch die Energie des Laserstrahls und ihre zeitliche Verteilung ist.

In EP 1 284 839 A1 und US 6,787,733 W2 wird ein Verfahren zur Laserbearbeitung von Materialien beschrieben, bei dem eine Online-Kontrolle des Bearbeitungsergebnisses erfolgt, um die Materialbearbeitung zu optimieren und unerwünschte Nebeneffekte zu minimieren. Mit diesem Verfahren ist zwar eine Online-Kontrolle des Bearbeitungsvorgangs möglich und können auch dabei auftretende Nebeneffekte beobachtet werden, jedoch kann auch mit diesem Verfahren nicht vermieden werden, dass umliegende Materialbereiche neben dem zu bearbeitenden Bereich durch die Laserstrahlung beeinflusst werden. Aus WO 2005/037482 A1 ist ein Bearbeitungsverfahren bekannt, welches mit ultrakurzen

Laserpulsen eine Materialbearbeitung vornimmt. Bei diesem Verfahren wird der Materialschlitten oder das konvergierende optische System erst dann verfahren, um die Laserpulse und das zu verarbeitende Material relativ zueinander zu bewegen, nachdem die Laserbestrahlung an einem gegebenen Punkt eine gewünschte Anzahl an Pulsen erreicht hat.

Der Wechselwirkungsmechanismus der Materialbearbeitung mittels kurzer, intensiver Laserpulse basiert auf der sog. Photodisruption. Photodisruption findet statt, wenn Licht auf Intensitäten in der Größenordnung von $10^{11}$ bis $10^{12}$ W/cm$^2$ fokussiert wird. Bei derartig hohen Intensitäten wird fast jede Art von Materie aufgrund von Multiphotonenabsorption schlagartig ionisiert (Plasmagenerierung). Findet dieser Vorgang in transparentem Material statt, bezeichnet man ihn als 'optischen' Durchbruch.

Aufgrund der explosionsartigen Ausdehnung des laserinduzierten Plasmas, entwickelt sich eine starke Stoßfront und - falls der Vorgang in flüssiger Umgebung stattfindet - eine Kavitationsblase. Die Stoßfront ebenso wie die Kavitationsblasen können ein erhebliches mechanisches Schädigungspotenzial für das umliegende Material darstellen. Dieses Schädigungspotenzial eines einzelnen Laserpulses skaliert jedoch mit der Laserpulsenergie.

Zum Zünden des optischen Durchbruchs ist jedoch eine hohe Intensität notwendig. Je kürzer ein Laserpuls, umso weniger Energie transportiert er bei gleicher Intensität. Folglich sind kurze Laserpulse eine notwendige Voraussetzung um mit hoher Präzision und geringen mechanischen Nebenwirkungen Photodisruption zu bewirken.

Die Laserpulsdauer, d.h. die Einwirkzeit der Laserstrahlung ist aber auch im Hinblick auf die thermische Schädigung des bestrahlten Material von entscheidender Bedeutung. Ist die Einstrahldauer des Lasers so kurz, dass während der Einstrahlung keine signifikante Menge an thermischer Energie durch Wärmediffusion aus dem Absorptionsvolumen verloren geht, spricht man vom sog. 'thermal confinement'. Die maximale Einstrahlzeit (Laserpulsdauer) bei der die Bedingungen des 'thermal confinement' erhalten sind wird auch thermische Relaxationszeit $\tau_R$ genannt und ist gegeben durch die Beziehung:

$$\tau_R = \frac{\delta^2}{4\kappa}$$

Hierbei bedeuten:

$\delta$:  optische Eindringtiefe in das bestrahlte Material im Falle der Disruption in transparenten Medien entspricht $\delta$ der Ausdehnung der nichtlinearen Absorptionszone

$\kappa$:  Wärmediffusionskonstante des bestrahlten Materials/Gewebes

Ist die Einwirkzeit (Laserpulsdauer) deutlich kürzer als $\tau_R$, so ist die thermische Einflusszone, die der Laserpuls auf das bestrahlte Material ausübt, hauptsächlich durch die optische Eindringtiefe $\delta$ bestimmt. Bei einer deutlich längeren Laserpulsdauer als $\tau_R$ wirkt die thermische Einflusszone aufgrund der Wärmediffusion über die optische Eindringtiefe hinaus.

Bei der Bearbeitung von Metallen, bei der eine optische Eindringtiefe von nur wenigen Nanometern vorliegt und eine vergleichsweise hohe Wärmediffusion vorherrscht ist daher die Verwendung von Piko- oder sogar Femtosekunden essentiell, um auch die Wärmeeinflusszone möglichst gering zu halten.

Jedoch hat die Verringerung der Laserpulsdauer derzeit technologische Grenzen und verhindert auch nicht, dass unerwünschte Beeinflussungen der umliegenden Bereiche stattfinden.

Grundsätzlich ist es für die Erzielung einer Materialtrennung erforderlich, mit dem Laserpuls eine bestimmte Menge an Energie in den zu trennenden Bereich einzubringen. Die Höhe dieser Energie ist materialabhängig. Bei der Materialtrennung entlang einer Linie oder einer Fläche wird eine Vielzahl von Laserpulsen mit der entsprechenden Laserpulsenergie nebeneinandergesetzt, um eine Trennlinie oder Trennfläche zu erzielen. Die disruptive Wirkung der einzelnen Laserpulse kann, je nach Materialbeschaffenheit, unerwünschte mechanische Veränderungen im Material hervorrufen. Dazu gehören Zerreißungen des Materials, was eine unregelmäßige Schnittfläche verursacht, oder die Bildung von Gasbläschen, die ebenfalls die Schnittgeometrie unvorteilhaft beeinflussen können. Das Ausmaß der unerwünschten Materialveränderungen skaliert dabei mit der Energie der einzelnen Laserpulse.

Es besteht daher ein Bedarf dafür, ein Verfahren zur Materialbearbeitung bereitzustellen, bei dem die Beeinflussung der benachbart zum bearbeiteten Bereich liegenden Bereiche weiter verringert oder idealerweise ganz verhindert wird.

Dieser Bedarf wird erfindungsgemäß befriedigt mit einem Verfahren gemäß Anspruch 1 und einer Vorrichtung gemäß Anspruch 10.

Die Erfindung macht sich die Erkenntnis zunutze, dass es nicht notwendigerweise erforderlich ist, die zur Trennung erforderliche Gesamtenergie an einem Ort mit einem einzelnen Laserpuls einzubringen. Stattdessen kann diese Gesamtenergie durch mehrere Laserpulse eingebracht werden, die beispielsweise von ein und demselben Laser erzeugt werden und aufeinanderfolgend an denselben Ort des Trennbereichs eingebracht werden. Auf diese Weise wird es ermöglicht, mittels mehrerer aufeinanderfolgender Laserpulse mit niedriger Laserpulsenergie eine Materialbearbeitung zu erzielen und hierbei eine Schädigung des bestrahlten Materials im umliegenden Bereich zu vermeiden.

Es hat sich gezeigt, dass die Energie zur Materialtrennung, also diejenige Gesamtenergie, die zur Erzielung einer Materialtrennung mindestens erforderlich ist, mit steigender Repetitionsfrequenz abfällt. Folglich kann bei hohen Repetitionsraten eine Materialtrennung mit einer wesentlich niedrigeren Laserpulsenergie erzielt werden als bei niedrigen Repetitionsraten.

Insbesondere kann die Laserpulsenergie durch Verringerung der Laserpulsintensität und/oder der Laserpulsdauer verringert werden. Dies heißt, dass die Laser pulsintensität und/oder die Laserpulsdauer beim erfindungsgemäßen Verfahren geringer ist als die Laserpulsintensität und/oder die Laserpulsdauer, die bei konventioneller Technik erforderlich ist, um eine Materialtrennung zu erzielen. Auf diese Weise kann auf einfache Weise eine Laserpulsenergieverringerung erzielt werden.

Es ist insbesondere vorteilhaft, wenn sich der bestrahlte Bereich von zwei oder mehr zeitlich aufeinanderfolgenden Laserpulsen der Abfolge von Laserpulsen räumlich überschneidet. Durch diese räumliche Überschneidung wird die Laserpulsenergie von zwei oder mehr Laserpulsen in den Überschneidungsbereich eingebracht und kann somit in der Addition eine Gesamtenergie ergeben, die eine Materialtrennung erzielt. Diese Erkenntnis geht von dem bisherigen Ansatz, die Laserpulse räumlich und zeitlich möglichst weit voneinander zu beabstanden, um den thermischen Einfluss jedes einzelnen Laserpulses von dem eines darauffolgenden Laserpulses zu trennen, weg und erzielt eine Reduzierung des unerwünschten mechanischen und thermischen Einflusses durch die Überschneidung, indem zugleich die Laserpulsenergie jedes einzelnen Laserpulses verringert wird.

Dabei ist es insbesondere vorteilhaft, wenn sich der bestrahlte Bereich von zwei oder mehr zeitlich aufeinanderfolgenden Laserpulsen der Abfolge von Laserpulsen räumlich im Bereich zwischen '0% bis 99%, insbesondere 92%-99%, überschneidet. Die Überschneidung der Laserpulse hängt grundsätzlich vom Durchmesser des Laserstrahls im Fokus (Fokusstrahldurchmesser), der Laserpulsfolgefrequenz und der relativen Vorschubgeschwindigkeit zwischen dem zu schneidenden Material und dem Laser ab. Die Überschneidung in Prozent wird in diesem Zusammenhang definiert als

$$\text{Überschneidung} = 100 \times \left( 1 - \frac{\text{Vorschubgeschwindigkeit}}{\text{Laserpulsfolgefrequenz} \times \text{Fokusstrahldurchmesser}} \right)$$

Die angegebenen Werte eignen sich zur Materialtrennung einer großen Anzahl von unterschiedlichen Materialien.

Erfindungsgemäß findet eine kontinuierliche Vorschubbewegung statt und diese kann so eingestellt werden, dass bei gegebener Laserpulsfolgefrequenz und Durchmesser des Laserstrahls im Fokus eine Überschneidung von 70-99%, insbesondere 92%-99%, erzielt wird.

Es ist weiterhin vorteilhaft, wenn die Laserpulsenergie, die Laserpulsintensität, die Abmessungen des Fokusbereichs und/oder die Laserpulsdauer eines einzelnen Laserpulses, die Laserpulsfolgefrequenz der Abfolge von Laserpulsen und/oder die Vorschubgeschwindigkeit zwischen Laserstrahl und dem zu bearbeitenden Material in Abhängigkeit der Materialeigenschaften voreingestellt wird. Eine wichtige voreinzustellende Abmessung des Fokusbereichs ist beispielsweise häufig der Durchmesser des Laserstrahls im Fokus oder die Länge des Fokusbereichs in Strahlrichtung, die u.a. durch die Apertur beeinflusst wird. Die optimalen Parameter hängen von den Materialeigenschaften des zu bearbeitenden Materials ab, insbesondere von der Wärmediffusionskonstante und der Relaxationszeit des Materials. Grundsätzlich ist es dabei beispielsweise vorteilhaft, bei hohen Wärmediffusionskonstanten höhere Laserpulsfolgefrequenzen einzustellen als bei niedrigen Wärmediffusionskonstanten. Zwischen Relaxationszeit und Laserpulsfolgefrequenz besteht ein umgekehrter Zusammenhang: Bei langen Relaxationszeiten können regelmäßig niedrigere Laserpulsfolgefrequenzen gewählt werden als bei kurzen Relaxationszeiten.

Es ist weiterhin vorteilhaft, wenn die Laserpulsfolgefrequenz der Abfolge der Laserpulse so hoch ist, dass innerhalb einer materialspezifischen Zeitdauer des zu trennenden Materials, beispielsweise der thermischen Relaxationszeit, mindestens zwei Laserpulse auf das zu trennende Material abgegeben werden. Auf diese Weise kann sich die Laserpulsenergie der zwei innerhalb der materialspezifischen Zeitdauer abgegebenen Laserpulse akkumulieren und eine Materialtrennung bewirken. Dabei kann die thermische und mechanische Schädigung dadurch verringert werden, dass eine Vielzahl von Laserpulsen innerhalb der materialspezifischen Zeitdauer auf einen Bereich des zu trennenden Materials abgegeben werden und die Energie jedes dieser Laserpulse entsprechend niedrig gewählt wird, um genau durch diese Vielzahl der Laserpulse die für eine Materialtrennung erforderliche, akkumulierte Gesamtenergie einzubringen.

Es hat sich dabei als besonders vorteilhaft erwiesen, wenn die Laserpulsfolgefrequenz größer als 10Hz, insbesondere größer als 50Hz ist und vorzugsweise zwischen 100Hz und 50MHz liegt. Diese Laserpulsfolgefrequenzbereiche bewirken bereits eine merkliche Absenkung der erforderlichen Laserpulsenergie pro Laserpuls und können somit die mechanische Schädigung signifikant verringern.

Bei den vorgenannten Ausführungsformen ist insbesondere zu beachten, dass zwischen Überschneidung, Laserpulsfolgefrequenz, der Abmessung des Fokusbereichs, beispielsweise des Durchmessers des Laserstrahls im Fokus, und Vorschubgeschwindigkeit ein mathematischer Zusammenhang besteht. Die letztlich entscheidende Größe, also die Anzahl der an einem Materialbearbeitungsort eingebrachten Laserpulse bzw. die Überschneidung lässt sich durch Variation der entsprechend anderen Parameter beeinflussen. So kann diese Anzahl durch Verringerung der Vorschubgeschwindigkeit, Vergrößerung des Durchmessers des Laserstrahls im Fokus oder Erhöhung der Laserpulsfolgefrequenz jeweils einzeln erhöht werden, wenn die entsprechenden beiden anderen Parameter konstant gehalten werden. Durch eine Verringerung des Durchmessers des Laserstrahls im Fokus, eine Erhöhung der Vorschubgeschwindigkeit und eine Verringerung der Laserpulsfolgefrequenz kann eine Verringerung der Anzahl der Laserpulse pro Ortspunkt der Linie, entlang welcher die Materialbearbeitung erfolgt, erzielt werden.

Weiterhin ist es vorteilhaft, wenn die Laserpulsenergie, die Laserpulsintensität, die Abmessungen des Fokusbereichs, die Laserpulsdauer eines einzelnen Laserpulses, die Laserpulsfolgefrequenz der Abfolge von Laserpulsen und/oder die Vorschubgeschwindigkeit zwischen Laserstrahl und dem zu bearbeitenden Material während des Bearbeitungsvorgangs verändert wird. Bei dieser Ausführungsform ist es beispielsweise möglich, die Laserpulsenergie der einzelnen Laserpulse so einzustellen, dass in Abhängigkeit der Überschneidung der Laserpulse genau die für eine Materialtrennung am gerade bearbeiteten Ort erforderliche Energie in das Material eingebracht wird. Dabei kann es vorteilhaft sein, wenn die Laserpulsenergie in Abhängigkeit der vorbestimmten oder eingestellten Laserpulsfolgefrequenz und/oder Vorschubgeschwindigkeit eingestellt wird. Eine solche Einstellung kann automatisch oder manuell durch den Benutzer erfolgen.

Bei den Verfahrensfortbildungen mit einstellbarer Laserpulsfolgefrequenz und einstellbarer Laserpulsenergie ist es insbesondere vorteilhaft, wenn bei einer ersten Laserpulsfolgefrequenz eine erste Laserpulsenergie eingestellt wird und bei einer zweiten Laserpulsfolgefrequenz, die höher ist als die erste Laserpulsfolgefrequenz, eine zweite Laserpulsenergie eingestellt wird, die niedriger ist als die erste Laserpulsenergie. Auf diese Weise wird eine automatische Anpassung der Laserpulsenergie an die Laserpulsfolgefrequenz erzielt und dabei jeweils die erforderliche akkumulierte Gesamtenergie zur Erzielung einer Materialtrennung eingebracht.

Dabei ist es insbesondere vorteilhaft, wenn

- die Laserpulsfolgefrequenz automatisch in Abhängigkeit der Laserpulsenergie eingestellt wird, oder

- die Laserpulsenergie automatisch in Abhängigkeit der Laserpulsfolgefrequenz eingestellt wird,

- Laserpulsenergie und/oder Laserpulsfolgefrequenz automatisch in Abhängigkeit der Vorschubgeschwindigkeit eingestellt werden, oder

- Laserpulsfolgefrequenz, Laserpulsenergie und/oder Vorschubgeschwindigkeit automatisch in Abhängigkeit von zumindest einer Materialeigenschaft des zu trennenden Materials eingestellt werden.

Diese Verfahrensfortbildung ermöglicht es, dass die für eine Materialtrennung vorrangig maßgeblichen Verfahrensparameter in Abhängigkeit voneinander eingestellt werden oder in Abhängigkeit des zu bearbeitenden Materials automatisch richtig eingestellt werden. So kann bei dem erfindungsgemäßen Verfahren auf eine Datenbank zurückgegriffen werden, die für jeweils typische Materialien die idealen Verfahrensparameter bereithält und durch Materialwahl werden dann diese Verfahrensparameter eingestellt. Alternativ kann aus einer Datenbank die für eine Materialtrennung erforderliche Gesamtenergie entnommen werden und dann anhand vom Benutzer gewählter Verfahrensparameter die entsprechend anderen Verfahrensparameter so gewählt werden, dass diese erforderliche Gesamtenergie erzielt wird.

Die Erfindung ist weiter fortgebildet, indem im Startbereich des Trennvorgangs die an einen Ort des zu bearbeitenden Materials eingebrachte Gesamtenergie höher ist als in einem Bereich im weiteren Verlauf des Trennvorgangs.

Diese Fortbildung beruht auf der Erkenntnis, dass zur Erzielung einer initialen Materialtrennung in einem Material eine höhere Gesamtenergie erforderlich ist, um einen ersten Materialtrennungseffekt zu erzielen und in der Folge zur Aufrechterhaltung und Erweiterung dieser initialen Materialtrennung eine niedrigere Gesamtenergie erforderlich ist. Es ist daher vorteilhaft, die Laserpulsenergie nach einem anfänglich hohen Niveau im Startbereich des Trennvorgangs zur Erzielung der initialen Materialtrennung nachfolgend abzusenken auf ein niedrigeres Niveau, welches zur Aufrechterhaltung und Weiterführung der initialen Materialtrennung ausreichend ist, um auf diese Weise die Schädigung entlang der Trennlinie oder der Trennfläche zu minimieren.

Insbesondere ist es vorteilhaft, wenn im Startbereich die Laserpulsenergie, die Laserpulsfolgefrequenz und/oder die Anzahl der auf einen Ort des Materials abgegebenen Laserpulse höher ist und/oder die Vorschubgeschwindigkeit zwischen Laserstrahl und dem zu bearbeitenden Material geringer ist als im weiteren Verlauf des Trennvorgangs. Die Laserpulsenergie setzt sich aus der Laserpulsintensität und der Laserpulsdauer zusammen. Zur Erzielung eines initialen Trennvorgangs im Startbereich kann daher beispielsweise eine höhere Laserpulsintensität eingestellt werden als im Bereich des weiteren Verlaufs des Trennvorgangs zum Aufrechterhalten und Weiterführen der Trennung.

In gleicher Weise könnte bei konstanter Laserpulsintensität die Laserpulsdauer im Startbereich erhöht werden und im weiteren Verlauf abgesenkt werden und/oder die Laserpulsfolgefrequenz im Startbereich erhöht werden und im weiteren Verlauf abgesenkt werden.

Eine weitere Verfahrensfortbildung besteht darin, dass die Laserpulsintensität und/oder die Laserpulsdauer eines einzelnen Laserpulses im Startbereich des Trennvorgangs höher ist als in einem Bereich im weiteren Verlauf des Trennvorgangs. Diese Verfahrensfortbildung kann in gleicher Weise die Initialtrennung mit hoher Laserpulsenergie und die weitere Trennung mit niedrigerer Laserpulsenergie durchführen, jedoch unter Variation anderer Parameter als bei der zuvor beschriebenen Ausführungsform.

Insbesondere ist es für das erfindungsgemäße Verfahren vorteilhaft, wenn die Laserpulsdauer kleiner ist als zehn Pikosekunden, insbesondere kleiner als eine Pikosekunde. Die so erzielte Laserstrahlbearbeitung im Femtosekundenbereich erlaubt für eine Vielzahl von Materialien besonders vorteilhafte Laserpulsenergieraten und Laserpulsfolgefrequenzen und vermeidet insgesamt unerwünschte Schädigungen.

Weiterhin ist es für das erfindungsgemäße Verfahren vorteilhaft, wenn der Laserstrahl fokussiert wird, vorzugsweise mit einem optischen System mit einer numerischen Apertur, die zumindest so groß ist, dass eine Materialtrennung unter der Oberfläche eines halb oder vollständig transparenten Materials erzielt wird, ohne dass ober- oder unterhalb des Trennbereichs liegende Materialbereiche geschädigt werden. Auf diese Weise wird es ermöglicht, einen Laserstrahlfokus zu erzeugen und in Strahlrichtung vor und hinter diesem Laserstrahlfokus eine Trennung oder Beschädigung des Materials zu vermeiden, wohingegen im Laserstrahlfokus eine solche Materialtrennung erzielt wird.

Schließlich ist es für das erfindungsgemäße Verfahren weiterhin vorteilhaft, wenn der Trennvorgang beobachtet wird und bei Nachlassen der Trennleistung die eingebrachte Gesamtenergie durch Verändern eines der für die Trennleistung relevanten Parameter, wie zuvor aufgezählt, erhöht wird. Unter Beobachtung soll in diesem Zusammenhang die direkte optische oder sensorische Beobachtung des Schnittes verstanden werden oder auch die Beobachtung oder Überwachung technischer Parameter, beispielsweise Geräteleistungsdaten, durch einen Benutzer oder automatisch, um aus einer Veränderung dieser Parameter auf eine geänderte Trennleistung zu schließen.

Ein weiterer Aspekt der Erfindung ist eine Vorrichtung gemäß Anspruch 10.

Die erfindungsgemäße Vorrichtung kann fortgebildet werden indem die Mittel zur Erzeugung der Abfolge von Laserpulsen ausgebildet sind, um die Laserpulsenergie durch Verringerung der Laserpulsintensität und/oder der Laserpulsdauer zu verringern.

Die erfindungsgemäße Vorrichtung kann weiter fortgebildet werden durch Vorschubmittel zum Erzeugen einer Relativbewegung zwischen Laserstrahl und dem zu trennenden Material und Mittel zum Erzeugen einer Laserpulsfolgefrequenz, die so zusammenwirken, dass sich der bestrahlte Bereich von zwei zeitlich aufeinanderfolgenden Laserpulsen der Abfolge von Laserpulsen räumlich überschneidet. Auf diese Weise wird die erfindungsgemäß vorteilhafte Überschneidung zumindest zweier aufeinanderfolgender Laserpulse erzielt. Die Vorschubmittel sind dabei vorzugsweise so gestaltet, dass sie in Abhängigkeit der Laserpulsfolgefrequenz betreibbar sind.

Weiterhin ist es vorteilhaft, wenn die Vorschubmittel und die Mittel zum Erzeugen einer Laserpulsfolgefrequenz so zusammenwirken, dass sich der bestrahlte Bereich von zwei zeitlich aufeinanderfolgenden Laserpulsen der Abfolge von Laserpulsen räumlich zu 100% oder im Bereich zwischen 10% und 100%, vorzugsweise um 70% bis 99%, vorzugsweise 92% bis 99%, überschneidet. Hierzu wird auf die vorangegangene Beschreibung der entsprechenden Verfahrensform verwiesen.

Vorzugsweise sind bei der erfindungsgemäßen Vorrichtung Steuerungsmittel zum Einstellen der Laserpulsenergie, der Laserpulsintensität und/oder der Laserpulsdauer eines einzelnen Laserpulses, der Laserpulsfolgefrequenz der Abfolge von Laserpulsen, der Abmessungen des Fokusbereichs des Laserstrahls am Bearbeitungsort, beispielsweise des Durchmessers des Laserstrahls im Fokus und/oder der Vorschubgeschwindigkeit zwischen Laserstrahl und dem zu bearbeitenden Material in Abhängigkeit der Materialeigenschaften vorhanden. Diese Steuerungsmittel können automatisch durch die Vorrichtung einen der Parameter in Abhängigkeit anderer Parameter betätigt werden oder können manuell durch einen Benutzer betätigt werden.

Dabei ist es insbesondere vorteilhaft, wenn die Steuerungsmittel so ausgebildet sind, dass die Laserpulsfolgefrequenz der Abfolge der Laserpulse so hoch ist, dass innerhalb einer materialspezifischen Zeitdauer, beispielsweise der thermischen Relaxationszeit des zu trennenden Materials, mindestens zwei Laserpulse auf das zu trennende Material abgegeben werden. Hierdurch wird die vorteilhafte Akkumulation von zwei oder mehr Laserpulsen innerhalb der materialspezifischen Zeitdauer erreicht und auf diese Weise eine besonders schonende Materialtrennung erzielt.

Insbesondere können dabei die Steuerungsmittel so ausgebildet sein, dass die Laserpulsfolgefrequenz größer als 10Hz, insbesondere größer als 50Hz und vorzugsweise zwischen 100Hz und 50MHz einstellbar ist. Hierzu wird auf die vorangegangene entsprechende Verfahrensform verwiesen.

Weiterhin ist es vorteilhaft, wenn die Steuerungsmittel ausgebildet sind, um zumindest einen der sechs zuvor aufgezählten Parameter während des Bearbeitungsvorgangs zu verändern Auf diese Weise kann die Gesamtenergie und/oder die Laserpulsenergie in Abhängigkeit der Materialeigenschaften oder in Abhängigkeit anderer Parameter des Schneidvorgangs eingestellt werden.

Die Steuerungsmittel können vorzugsweise so ausgebildet sein, dass

- die Laserpulsfolgefrequenz automatisch in Abhängigkeit der Laserpulsenergie eingestellt wird, oder

- die Laserpulsenergie automatisch in Abhängigkeit der Laserpulsfolgefrequenz eingestellt wird,

- Laserpulsenergie und/oder Laserpulsfolgefrequenz automatisch in Abhängigkeit der Verfahrensgeschwindigkeit eingestellt werden, oder Laserpulsfolgefrequenz, Laserpulsenergie und/oder Vorschubgeschwindigkeit automatisch in Abhängigkeit der zumindest einer Materialeigenschaft des zu trennenden Materials eingestellt werden.

Insbesondere ist es für die erfindungsgemäße Vorrichtung vorgesehen, wenn die Steuerungsmittel ausgebildet sind um zumindest einen der sechs zuvor aufgezählten Parameter (Laserpulsfolgefrequenz, Laserpulsenergie, Laserpulsintensität, Laserpulsdauer, Fokusabmessung und Vorschubgeschwindigkeit) so zu steuern, dass im Startbereich des Trennvorgangs die an einen Ort des zu bearbeitenden Materials eingebrachte Gesamtenergie höher ist als in einem Bereich im weiteren Verlauf des Trennvorgangs.

Weiterhin ist es bevorzugt, die erfindungsgemäße Vorrichtung fortzubilden, indem die Steuerungsmittel ausgebildet sind, um im Startbereich die Laserpulsenergie, die Laserpulsfolgefrequenz und/oder die Anzahl der auf einen Ort des Materials abgegebenen Laserpulse höher und/oder die Vorschubgeschwindigkeit zwischen Laserstrahl und dem zu bearbeitenden Material geringer einzustellen als im weiteren Verlauf des Trennvorgangs.

Vorzugsweise sind die Steuerungsmittel ausgebildet, um die Laserpulsintensität und/oder die Laserpulsenergie eines einzelnen Laserpulses im Startbereich des Trennvorgangs höher einzustellen als im weiteren Verlauf des Trennvorgangs.

Insbesondere ist es vorteilhaft, wenn die Mittel zur Erzeugung einer Abfolge von Laserpulsen ausgebildet sind, um eine Laserpulsdauer kleiner als 10 Pikosekunden, vorzugsweise kleiner als 1 Pikosekunde zu erzeugen.

Die erfindungsgemäße Vorrichtung kann fortgebildet werden durch Fokussiermittel zur Fokussierung des Laserstrahls, vorzugsweise mit einem optischen System mit einer numerischen Apertur, die zumindest so groß ist, dass eine Materialtrennung unter der Oberfläche eines halb oder vollständig transparenten Materials erzielt wird, ohne dass ober- oder unterhalb des Trennbereichs liegende Materialbereiche geschädigt werden.

Schließlich kann die erfindungsgemäße Vorrichtung fortgebildet werden durch eine Beobachtungsvorrichtung zum Beobachten des Trennvorgangs, die mit den Mitteln zur Erzeugung einer Abfolge von Laserpulsen, den Mitteln zur Leitung der Laserpulse auf einen zu trennenden Materialbereich und/oder den Vorschubmitteln so zusammenwirkt, dass bei Nachlassen der Trennleistung die eingebrachte Gesamtenergie durch Verändern zumindest eines der sechs vorgenannten Parameter erhöht wird. Hierzu wird auf die vorangehende Beschreibung zum Verfahren mit Beobachtung des Trennvorgangs verwiesen.

Zu den Fortbildungsformen der erfindungsgemäßen Vorrichtung wird hinsichtlich deren Vorteilen, Wirkungsweisen und bevorzugten Ausführungsvarianten auf die voranstehende Beschreibung der jeweiligen Eigenschaften der entsprechenden Verfahrensfortbildung verwiesen.

Die Erfindung wird im Weiteren anhand konkreter Ausführungsbeispiele und Versuchsergebnisse in Verbindung mit den Figuren erläutert. Darin zeigen:

Figur 1: Ein Diagramm, welches den Zusammenhang zwischen der für eine Materialtrennung einzubringenden Pulsenergie und der Laserpulsfolgefrequenz zeigt,

Figur 2: Ein Diagramm, welches den Zusammenhang zwischen der für den Beginn einer Materialtrennung erforderlichen Laserpulsenergie und der mindestens zur Weiterführung der Materialtrennung erforderlichen Laserpulsenergie zu der Laserpulsüberlappung im Bereich von -100% bis +100% zeigt,

Figur 3: Ein Diagramm, welches den Zusammenhang zwischen der einer Materialtrennung erforderlichen Laserpulsenergie zu der Laserpulsüberlappung im Bereich von 92% bis 100% zeigt,

Figur 4: Eine schematische Darstellung einer Linienmaterialtrennung mit einer Laserpulsüberlappung von 50%,

Figur 5: Eine schematische Darstellung einer Linienmaterialtrennung mit einer variablen Laserpulsüberlappung im Startbereich und im weiteren Verlauf des Trennvorgangs.

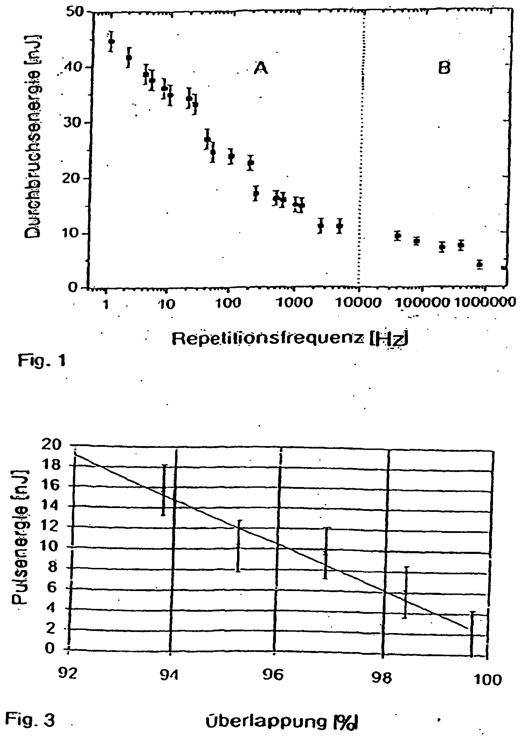

Bezugnehmend auf Figur 1 kann man diesem Diagramm, welches im Bereich A mit einer Laserpulsdauer von 150 fs, einer Wellenlänge von 780 nm und einer Apertur von 0,6 bestimmt wurde und im Bereich B mit einer Laserpulsdauer von etwa 15 fs, einer Wellenlänge von 800 nm und einer Apertur von 0,5 bestimmt wurde, entnehmen, dass bei einer Laserpulsfolgefrequenz von 1 Hertz eine Energie von ca. 45 nJ benötigt wird, um eine Materialtrennung zu erzielen. Diese benötigte Energie sinkt mit zunehmender Laserpulsfolgefrequenz und erreicht bei einer Laserpulsfolgefrequenz von 1 MHz einen Wert von unter 5 nJ.

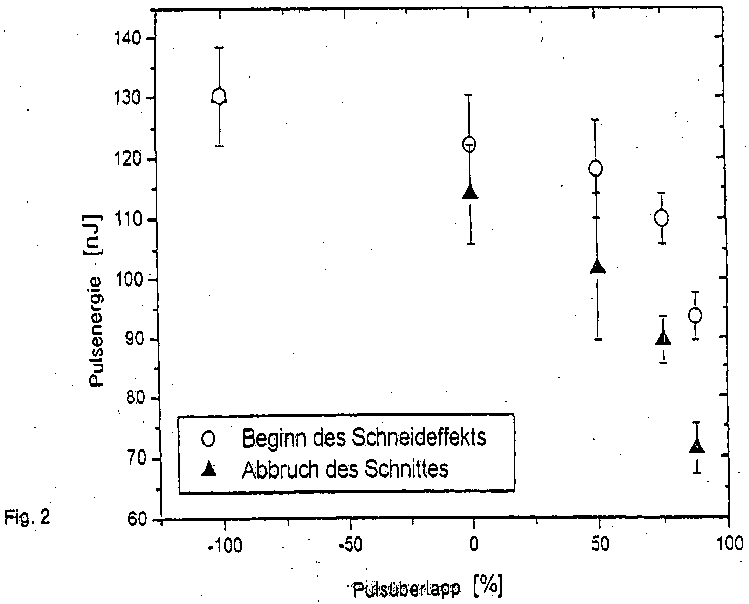

In Figur 2 ist die Abhängigkeit der für den Beginn einer Materialtrennung erforderlichen Laserpulsenergie ("Beginn des Schnittes") und der mindestens zur Weiterführung der Materialtrennung erforderlichen Laserpulsenergie ("Abbruch des Schnittes") zu der Laserpulsüberlappung im Bereich von -100% bis +100% gezeigt. Dabei bedeutet eine negative Pulsüberlappung, dass zwischen zwei benachbarten Pulsen ein unbestrahlter Materialbereich verbleibt, der bei -100% Pulsüberlappung beispielsweise genau dem Fokusdurchmesser entspricht.

Man kann erkennen, dass bei ausreichender Beabstandung der Einzelpulse voneinander (negativer Pulsüberlapp) der Beginn und der Abbruch des Schneideffekts bei der gleichen Pulsenergie stattfindet, d.h. es findet keine gegenseitige Beeinflussung der Pulse untereinander statt. Je größer der Pulsüberlapp jedoch gewählt wird, desto niedriger ist einerseits die Pulsenergie, die für Schneidbeginn erforderlich ist und die Pulsenergie, bei der Schneidabbruch erfolgt. Zudem liegen die Pulsenergie, die für Schneidbeginn erforderlich ist, und die Pulsenergie, bei der der Schneidabbruch erfolgt umso weiter auseinander, je höher die Pulsüberlappung ist. Folglich kann mit umso niedrigerer Pulsenergie initial getrennt werden und mit umso niedrigerer Pulsenergie der Schneidvorgang fortgeführt werden, je größer die Pulsüberlappung gewählt wird.

Fig. 3 stellt die Messergebnisse für das Schneiden bei hohen Pulsüberlappungen dar. Eingetragen sind die Ergebnisse von fünf Messreihen bei unterschiedlichen Überlappungen und eine Ausgleichsgerade durch diese Messreihen. Man kann erkennen, dass bei einer Überlappung von 92% mit einer Einzellaserpulsenergie von ca. 19 nJ das Verfahren betrieben werden muss. Diese erforderliche Einzellaserpulsenergie sinkt mit steigender Überlappung und erreicht bei einer Überlappung von ca. 99,5% einen Wert von nur noch 2 nJ.

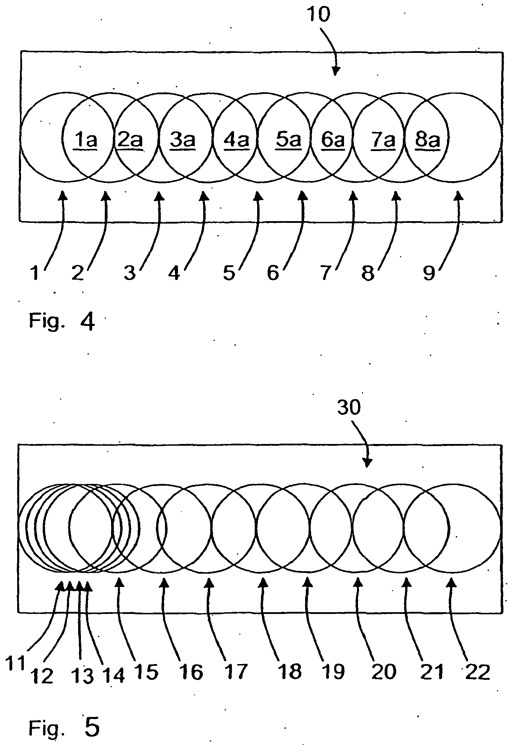

Bezugnehmend auf Figur 4 ist ein zu trennendes Material 10 gezeigt und eine Abfolge von Einzellaserpulsen 1-9, die zur Trennung dieses Materials dienen. Die Einzellaserpulse sind schematisch in Gestalt ihres Fokusbereichs gezeigt. Die Einzellaserpulse 1-9 werden in zeitlicher Folge von links nach rechts auf das Material aufgebracht. Hierbei überlappen sich die Laserpulse jeweils in den Bereichen 1-8a. In der in Figur 4 dargestellten Verfahrensausbildung sind Laserpulsfolgefrequenz, Vorschubgeschwindigkeit und Fokusdurchmesser so eingestellt, dass sich eine Überlappung von 50% ergibt, d. h. die Laserpulse 1 und 2 überlappen sich im Bereich 1 a, die Laserpulse 2 und 3 überlappen sich im Bereich 2a usw. Auf diese Weise wird jeder Bereich entlang der Schnittlinie von zwei Laserpulsen bestrahlt.

Bezugnehmend auf Figur 5 ist eine Abfolge von Laserpulse 11-22 gezeigt, die zur Trennung eines Materialblocks 30 dienen.

Die Laserpulse 11-22 werden in aufsteigender Reihenfolge von links nach rechts aufgetragen. Es ist erkennbar, dass die Laserpulse 11-14 eine höhere Überlappung aufweisen als die nachfolgenden Laserpulse 15-22. Dies dient dazu, um im linken Startbereich des Trennvorgangs eine höhere Gesamtenergie einzubringen, die für eine initiale Trennung ausreichend ist, als im weiteren Verlauf nach rechts entlang der Trennlinie, wo nur eine geringere Gesamtenergie für den Trennbereich erforderlich ist, um die initiale Trennung fortzuführen.

Die in Figur 5 gezeigte Häufung der Laserpulse 11-14 kann beispielsweise erreicht werden, indem in diesem Startbereich eine erhöhte Laserpulsfolgefrequenz gewählt wird oder indem in diesem Startbereich eine verringerte Vorschubgeschwindigkeit eingestellt wird.

**Patentansprüche**

1. Verfahren zur Materialtrennung mittels eines Lasers, bei dem eine Abfolge von Laserpulsen erzeugt wird und ein zu bearbeitender Materialbereich mit der Abfolge der Laserpulse bestrahlt wird,
wobei die Laserpulsenergie eines einzelnen Laserpulses der Abfolge der Laserpulse kleiner ist als die Laserpulsenergie, die zur Erzeugung einer Materialtrennung mit einem isolierten Laserpuls in dem mit dem einzelnen Laserpuls der Abfolge der Laserpulse bestrahlten Bereich erforderlich ist, dass der Laserstrahl relativ zum bearbeitenden Material mit einer kontinuierlichen Vorschubbewegung bewegt wird und dass sich der bestrahlte Bereich von zumindest zwei zeitlich aufeinander folgenden Laserpulsen der Abfolge von Laserpulsen räumlich im Bereich zwischen 70% und 99 % überschneidet,
**dadurch gekennzeichnet, dass** im Startbereich des Trennvorgangs die an einen Ort des zu bearbeitenden Materials eingebrachte Gesamtenergie höher ist als in einem Bereich im weiteren Verlauf des Trennvorgangs.

2. Verfahren nach Anspruch 1,
**dadurch gekennzeichnet, dass** die Laserpulsenergie durch Verringerung der Laserpulsintensität und/oder der Laserpulsdauer verringert wird.

3. Verfahren nach Anspruch 1 oder 2,
**dadurch gekennzeichnet, dass** sich der bestrahlte Bereich von zumindest zwei zeitlich aufeinanderfolgenden Laserpulsen der Abfolge von Laserpulsen räumlich um 92%-99% überschneidet.

4. Verfahren nach einem der vorhergehenden Ansprüche,
**dadurch gekennzeichnet, dass** die Laserpulsfolgefrequenz der Abfolge der Laserpulse so hoch ist, dass innerhalb einer materialspezifischen Zeitdauer des zu trennenden Materials mindestens zwei Laserpulse auf das zu trennende Material abgegeben werden.

5. Verfahren nach einem der vorhergehenden Ansprüche ,
**dadurch gekennzeichnet, dass** die Laserpulsenergie, die Laserpulsintensität, die Abmessungen des Fokusbereichs, die Laserpulsdauer eines einzelnen Laserpulses, die Laserpulsfolgefrequenz der Abfolge von Laserpulsen und/oder die Vorschubgeschwindigkeit zwischen Laserstrahl und dem zu bearbeitenden Material während des Bearbeitungsvorgangs verändert wird.

6. Verfahren nach Anspruch 5,
**dadurch gekennzeichnet, dass** bei einer ersten Laserpulsfolgefrequenz eine erste Laserpulsenergie eingestellt wird und bei einer zweiten Laserpulsfolgefrequenz, die höher ist als die erste Laserpulsfolgefrequenz, eine zweite Laserpulsenergie eingestellt wird, die niedriger ist als die erste Laserpulsenergie.

**7.** Verfahren nach Anspruch 6,
**dadurch gekennzeichnet, dass**

a. die Laserpulsfolgefrequenz automatisch in Abhängigkeit der Laserpulsenergie eingestellt wird, oder
b. die Laserpulsenergie automatisch in Abhängigkeit der Laserpulsfolgefrequenz eingestellt wird,
c. Laserpulsenergie und/oder Laserpulsfolgefrequenz automatisch in Abhängigkeit der Vorschubgeschwindigkeit eingestellt werden, oder
d. Laserpulsfolgefrequenz, Laserpulsenergie und/oder Vorschubgeschwindigkeit automatisch in Abhängigkeit

von zumindest einer Materialeigenschaft des zu trennenden Materials eingestellt werden.

**8.** Verfahren nach einem der vorhergehenden Ansprüche ,
**dadurch gekennzeichnet, dass** der Laserstrahl fokussiert wird, vorzugsweise mit einem optischen System mit einer numerischen Apertur, die zumindest so groß ist, dass eine Materialtrennung unter der Oberfläche eines halb oder vollständig transparenten Materials erzielt wird, ohne dass ober- oder unterhalb des Trennbereichs liegende Materialbereiche geschädigt werden.

**9.** Verfahren nach einem der vorhergehenden Ansprüche.
**dadurch gekennzeichnet, dass** der Trennvorgang beobachtet wird und bei Nachlassen der Trennleistung die eingebrachte Gesamtenergie durch Verändern eines der Parameter nach Anspruch 5 erhöht wird.

**10.** Vorrichtung zur Materialtrennung, umfassend

- Mittel zur Erzeugung einer Abfolge von Laserpulsen
- Mittel zur Leitung der Laserpulse auf einen zu trennenden Materialbereich, mit Vorschubmitteln zum Erzeugen einer kontinuierlichen Relativbewegung zwischen Laserstrahl und dem zu trennenden Material, wobei die Mittel zur Erzeugung einer Abfolge von Laserpulsen so ausgebildet sind, dass die Laserpulsenergie eines einzelnen Laserpulses der Abfolge der Laserpulse kleiner ist als die Laserpulsenergie, die zur Erzeugung einer Materialtrennung mit einem isolierten Laserpuls in dem mit dem einzelnen Laserpuls der Abfolge der Laserpulse bestrahlten Bereich erforderlich ist und dass sich der bestrahlte Bereich von zumindest zwei zeitlich aufeinander folgenden Laserpulsen der Abfolge von Laserpulsen räumlich im Bereich zwischen 70% und 99 % überschneidet,

**dadurch gekennzeichnet, dass** die Steuerungsmittel ausgebildet sind um zumindest einen der in Anspruch 5 aufgezählten Parameter so zu steuern, dass im Startbereich des Trennvorgangs die an einen Ort des zu bearbeitenden Materials eingebrachte Gesamtenergie höher ist als in einem Bereich im weiteren Verlauf des Trennvorgangs.

**11.** Vorrichtung nach Anspruch 10,
**dadurch gekennzeichnet, dass** Mittel zur Erzeugung der Abfolge von Laserpulsen ausgebildet sind, um die Laserpulsenergie durch Verringerung der Laserpulsintensität und/oder der Laserpulsdauer zu verringern.

**12.** Vorrichtung nach Anspruch 10 oder 11,
**gekennzeichnet durch** Vorschubmittel zum Erzeugen einer kontinuierlichen Relativbewegung zwischen Laserstrahl und dem zu trennenden Material und Mittel zum Erzeugen einer Laserpulsfolgefrequenz, die so zusammenwirken, dass sich der bestrahlte Bereich von zwei zeitlich aufeinanderfolgenden Laserpulsen der Abfolge von Laserpulsen räumlich im Bereich zwischen 92%-99% überschneidet.

**13.** Vorrichtung nach Anspruch 12,
**dadurch gekennzeichnet, dass** die Steuerungsmittel so ausgebildet sind, dass bei einer ersten Laserpulsfolgefrequenz eine erste Laserpulsenergie eingestellt wird und bei einer zweiten Laserpulsfolgefrequenz, die höher ist als die erste Laserpulsfolgefrequenz, eine zweite Laserpulsenergie eingestellt wird, die niedriger ist als die erste Laserpulsenergie.

**14.** Vorrichtung nach Anspruch 12 oder 13,
**dadurch gekennzeichnet, dass** die Steuerungsmittel so ausgebildet sind, dass die Laserpulsfolgefrequenz der Abfolge der Laserpulse so hoch ist, dass innerhalb einer für das Material wesentlichen Relaxationszeit des zu trennenden Materials mindestens zwei Laserpulse auf das zu trennende Material abgegeben werden.

**15.** Vorrichtung nach einem der vorhergehenden Ansprüche 10-14,

**dadurch gekennzeichnet, dass** die Steuerungsmittel ausgebildet sind, um zumindest einen der in Anspruch 11 aufgezählten Parameter während des Bearbeitungsvorgangs zu verändern.

16. Vorrichtung nach einem der vorhergehenden Ansprüche 10-15, **dadurch gekennzeichnet, dass** die Steuerungsmittel so ausgebildet sind, dass

a. die Laserpulsfolgefrequenz automatisch in Abhängigkeit der Laserpulsenergie eingestellt wird, oder
b. die Laserpulsenergie automatisch in Abhängigkeit der Laserpulsfolgefrequenz eingestellt wird,
c. Laserpulsenergie und/oder Laserpulsfolgefrequenz automatisch in Abhängigkeit der Verfahrensgeschwindigkeit eingestellt werden, oder
d. Laserpulsfolgefrequenz, Laserpulsenergie und/oder Vorschubgeschwindigkeit automatisch in Abhängigkeit der zumindest einer Materialeigenschaft des zu trennenden Materials eingestellt werden.

17. Vorrichtung nach einem der vorhergehenden Ansprüche 10-16, **gekennzeichnet durch** Fokussiermittel zur Fokussierung des Laserstrahls, vorzugsweise mit einem optischen System mit einer numerischen Apertur, die zumindest so groß ist, dass eine Materialtrennung unter der Oberfläche eines halb oder vollständig transparenten Materials erzielt wird, ohne dass ober- oder unterhalb des Trennbereichs liegende Materialbereiche geschädigt werden.

18. Vorrichtung nach einem der vorhergehenden Ansprüche 10-17, **gekennzeichnet durch** eine Beobachtungsvorrichtung zum Beobachten des Trennvorgangs, die mit den Mitteln zur Erzeugung einer Abfolge von Laserpulsen, den Mitteln zur Leitung der Laserpulse auf einen zu trennenden Materialbereich und/oder den Vorschubmitteln so zusammenwirkt, dass bei Nachlassen der Trennleistung die eingebrachte Gesamtenergie **durch** Verändern zumindest eines der Parameter aus Anspruch 5 erhöht wird.

## Claims

1. Method for separating material by means of a laser, wherein a sequence of laser pulses is generated and an area of material to be machined is irradiated with the sequence of laser pulses,
wherein the laser pulse energy of a single laser pulse in the sequence of laser pulses is lower than the laser pulse energy required to produce a separation of material by an isolated laser pulse in the area irradiated by the single pulse of the sequence laser pulses, in that the laser beam is moved with a continuous feed movement relative to the material being machined and in that the irradiated area is spatially overlapped by at least two consecutive laser pulses of the sequence of laser pulses in the range between 70% and 99%,
**characterised in that** in the starting area for the separation operation, the total energy introduced at one location on the material to be machined is greater than in an area during the further course of the separation operation

2. Method according to claim 1, **characterised in that** the laser pulse energy is reduced by reducing the laser pulse intensity and/or the laser pulse duration.

3. Method according to claim 1 or 2, **characterised in that** the irradiated area is spatially overlapped by 92 % to 99 %, by at least two consecutive laser pulses of the sequence of laser pulses.

4. Method according to any one of the preceding claims, **characterised in that** the laser pulse repetition rate of the sequence of laser pulses is so high that at least two laser pulses are delivered to the material to be separated within a duration specific to the material to be separated.

5. Method according to any one of the preceding claims, **characterised in that** the laser pulse energy, the laser pulse intensity, the dimensions of the focus area, the laser pulse duration of a single laser pulse, the laser pulse repetition rate of the sequence of laser pulses and/or the feed speed between the laser beam and the material to be machined are altered during the machining operation.

6. Method according to claim 5, **characterised in that** a first laser pulse energy is set for a first laser pulse repetition rate and a second laser pulse energy, which is lower than the first laser pulse energy, is set for a second laser pulse repetition rate, which is higher than the first laser pulse repetition rate.

7. Method according to claim 6, **characterised in that**

a. the laser pulse repetition rate is automatically set depending on the laser pulse energy, or

b. the laser pulse energy is automatically set depending on the laser pulse repetition rate,

c. the laser pulse energy and/or laser pulse repetition rate is automatically set depending on the feed speed, or

d. the laser pulse repetition rate, the laser pulse energy and/or feed speed are automatically set depending on at least one property of the material to be separated.

8. Method according to any one of the preceding claims, **characterised in that** the laser beam is focused, preferably with an optical system with a numerical aperture that is at least so large that material separation is achieved under the surface of a semi- or fully transparent material, without areas of material lying above or below the separation area being damaged.

9. Method according to any one of the preceding claims, **characterised in that** the separation operation is observed and if the separation performance declines, the total energy introduced is increased by altering one of the parameters according to claim 5.

10. Device for separating material, comprising

- means for generating a sequence of laser pulses
- means for guiding the laser pulses onto an area of material to be separated, with means for generating a continuous relative movement between the laser beam and the material to be separated, wherein the means for generating a sequence of laser pulses are configured in such a way that the laser pulse energy of a single laser pulse of the sequence of laser pulses is less than the laser pulse energy required to produce material separation using an isolated laser pulse in the area irradiated with the single laser pulse of the sequence of laser pulses and in that the irradiated area is spatially overlapped by at least two consecutive laser pulses of the sequence of laser pulses in the range between 70 % and 99 %,

**characterised in that** the control means are configured to control at least one parameter listed in claim 5 in such a way that in the starting area of the separation operation, the total energy introduced at one location on the material to be machined is higher than in an area in the further course of the separation operation.

11. Device according to claim 10, **characterised in that** means for generating the sequence of laser pulses are configured to reduce the laser pulse energy by reducing the laser pulse intensity and/or the laser pulse duration.

12. Device according to claim 10 or 11, **characterised by** feed means for generating a continuous relative movement between the laser beam and the material to be separated, and means for generating a laser pulse repetition rate, which cooperate in such a way that the irradiated range is spatially overlapped by two consecutive laser pulses of the sequence of laser pulses in the range between 92 % and 99 %.

13. Device according to claim 12, **characterised in that** the control means are configured in such a way that a first laser pulse energy is set for a first laser pulse repetition rate and a second laser pulse energy, which is lower than the first laser pulse energy, is set for a second laser pulse repetition rate, which is higher than the first laser pulse repetition rate.

14. Device according to claim 12 or 13, **characterised in that** the control means are configured in such a way that the laser pulse repetition rate of the sequence of laser pulses is so high that at least two laser pulses are delivered to the material to be separated within a relaxation time of the material to be separated that is significant for the material.

15. Device according to any one of preceding claims 10 to 14, **characterised in that** control means are configured to alter at least one parameter listed in claim 10 during the machining operation.

16. Device according to any one of the preceding claims 10 to 15, **characterised in that** the control means are configured in such a way that

a. the laser pulse repetition rate is automatically set depending on the laser pulse energy, or

b. the laser pulse energy is automatically set depending on the laser pulse repetition rate,

c. the laser pulse energy and/or laser pulse repetition rate is automatically set depending on the method speed, or

d. the laser pulse repetition rate, the laser pulse energy and/or the feed speed are automatically set depending on at least one property of the material to be separated.

**17.** Device according to any one of the preceding claims 10 to 16, **characterised by** focusing means for focusing the laser beam, preferably with an optical system with a numerical aperture, which is at least so large that material separation is achieved under the surface of a semi- or fully transparent material without areas of material lying above or below the separation area being damaged.

**18.** Device according to any one of the preceding claims 10 to 17, **characterised by** an observation device for observing the separation operation, which cooperates with the means for generating a sequence of laser pulses, the means for guiding the laser pulses onto an area of material to be separated and/or the feed means in such a way that if the separation performance declines, the total energy introduced is increased by altering at least one of the parameters from claim 5.

**Revendications**

**1.** Procédé de séparation d'un matériau à l'aide d'un laser, selon lequel une séquence d'impulsions laser est générée et une zone du matériau à traiter est irradiée avec la séquence d'impulsions laser,
dans lequel l'énergie d'impulsion laser d'une seule impulsion laser de la séquence d'impulsions laser est inférieure à l'énergie d'impulsion laser qui est nécessaire à la production d'une séparation de matériau avec une impulsion laser isolée dans la zone irradiée avec l'impulsion laser unique de la séquence d'impulsions laser, en ce que le rayon laser est déplacé par rapport au matériau à traiter avec un mouvement d'avance continu et en ce que les zones irradiées par au moins deux impulsions laser successives dans le temps de la séquence d'impulsions laser se recoupent dans l'espace dans une plage comprise entre 70 % et 99 %,
**caractérisé en ce que**, dans la zone de départ du processus de séparation, l'énergie totale apportée en un endroit du matériau à traiter est plus élevée que dans une zone au cours de la suite du processus de séparation.

**2.** Procédé selon la revendication 1,
**caractérisé en ce que** l'énergie d'impulsion laser est diminuée en diminuant l'intensité d'impulsion laser et/ou la durée d'impulsion laser.

**3.** Procédé selon la revendication 1 ou 2,
**caractérisé en ce que** les zones irradiées par au moins deux impulsions laser successives dans le temps de la séquence d'impulsions laser se recoupent dans l'espace 92 % à 99 %.

**4.** Procédé selon l'une quelconque des revendications précédentes,
**caractérisé en ce que** la fréquence d'impulsion laser de la séquence d'impulsions laser est suffisamment élevée pour qu'au moins deux impulsions laser soient émises sur le matériau à séparer au cours d'une durée spécifique du matériau à séparer.

**5.** Procédé selon l'une quelconque des revendications précédentes,
**caractérisé en ce que** l'énergie d'impulsion laser, l'intensité d'impulsion laser, les dimensions de la zone de focalisation, la durée d'impulsion laser d'une impulsion laser unique, la fréquence d'impulsion laser de la séquence d'impulsions laser et/ou la vitesse d'avance entre le rayon laser et le matériau à traiter sont modifiées durant le processus de traitement.

**6.** Procédé selon la revendication 5,
**caractérisé en ce qu'**une première énergie d'impulsion laser est ajustée pour une première fréquence d'impulsion laser, et **en ce qu'**une deuxième énergie d'impulsion laser, qui est inférieure à la première énergie d'impulsion laser, est ajustée pour une deuxième fréquence d'impulsion laser qui est plus élevée que la première fréquence d'impulsion laser.

**7.** Procédé selon la revendication 6,
**caractérisé en ce que**

a. la fréquence d'impulsion laser est ajustée automatiquement en fonction de l'énergie d'impulsion laser, ou
b. l'énergie d'impulsion laser est ajustée automatiquement en fonction de la fréquence d'impulsion laser,
c. l'énergie d'impulsion laser et/ou la fréquence d'impulsion laser sont ajustées automatiquement en fonction de la vitesse d'avance, ou
d. la fréquence d'impulsion laser, l'énergie d'impulsion laser et/ou la vitesse d'avance sont ajustées automatiquement en fonction d'au moins une propriété du matériau à séparer.

8. Procédé selon l'une quelconque des revendications précédentes, **caractérisé en ce que** le rayon laser est focalisé, de préférence avec un système optique ayant une ouverture numérique qui est au moins suffisamment grande pour obtenir une séparation de matériau en dessous de la surface d'un matériau semi-transparent ou complètement transparent sans que des zones de matériau situées au-dessus ou en dessous de la zone de séparation soient endommagées.

9. Procédé selon l'une quelconque des revendications précédentes, **caractérisé en ce que** le processus de séparation est observé et **en ce que**, en cas de baisse de la puissance de séparation, l'énergie totale apportée est augmentée par modification d'un des paramètres selon la revendication 5.

10. Dispositif de séparation de matériau, comportant

   - des moyens de génération d'une séquence d'impulsions laser
   - des moyens de guidage des impulsions laser sur une zone de matériau à séparer, avec des moyens d'avance destinés à générer un mouvement relatif continu entre le rayon laser et le matériau à séparer,

   dans lequel les moyens de génération d'une séquence d'impulsions laser sont conçus de sorte que l'énergie d'une seule impulsion laser de la séquence d'impulsions laser soit inférieure à l'énergie d'impulsion laser qui est nécessaire pour générer une séparation de matériau avec une impulsion laser isolée dans la zone irradiée avec l'impulsion laser unique de la séquence d'impulsions laser, et en ce que les zones irradiées par au moins deux impulsions laser successives dans le temps de la séquence d'impulsions laser se recoupent dans l'espace dans une plage comprise entre 70 % et 99 %, **caractérisé en ce que** les moyens de commande sont conçus pour commander au moins un des paramètres énumérés dans la revendication 5, de sorte que, dans la zone de départ du processus de séparation, l'énergie totale apportée en un endroit du matériau à traiter est plus élevée que celle dans une zone au cours de la suite du processus de séparation.

11. Dispositif selon la revendication 10, **caractérisé en ce que** les moyens de génération de la séquence d'impulsions laser sont conçus pour diminuer l'énergie d'impulsion laser en diminuant l'intensité d'impulsion laser et/ou la durée d'impulsion laser.

12. Dispositif selon la revendication 10 ou 11, **caractérisé par** des moyens d'avance destinés à générer un mouvement relatif continu entre le rayon laser et le matériau à séparer et par des moyens destinés à générer une fréquence d'impulsion laser, lesdits moyens interagissant de sorte que les zones irradiées par deux impulsions laser successives dans le temps de la séquence d'impulsions laser se recoupent dans l'espace dans une plage allant de 92 % à 99 %.

13. Dispositif selon la revendication 12, **caractérisé en ce que** les moyens de commande sont conçus de sorte qu'une première énergie d'impulsion laser soit ajustée pour une première fréquence d'impulsion laser et qu'une deuxième énergie d'impulsion laser, qui est inférieure à la première énergie d'impulsion laser, soit ajustée pour une deuxième fréquence d'impulsion laser qui est plus élevée que la première fréquence d'impulsion laser.

14. Dispositif selon la revendication 12 ou 13, **caractérisé en ce que** les moyens de commande sont conçus de sorte que la fréquence d'impulsion laser de la séquence d'impulsions laser soit suffisamment élevée pour qu'au moins deux impulsions laser soient émises sur le matériau à séparer au cours d'un temps de relaxation fondamental du matériau à séparer.

15. Dispositif selon l'une quelconque des revendications précédentes 10 à 14, **caractérisé en ce que** les moyens de commande sont conçus pour modifier au moins un des paramètres énumérés dans la revendication 10 durant le processus de traitement.

16. Dispositif selon l'une quelconque des revendications précédentes 10 à 15, **caractérisé en ce que** les moyens de commande sont conçus de sorte que

   a. la fréquence d'impulsion laser soit ajustée automatiquement en fonction de l'énergie d'impulsion laser, ou

b. l'énergie d'impulsion laser soit ajustée automatiquement en fonction de la fréquence d'impulsion laser,

c. l'énergie d'impulsion laser et/ou la fréquence d'impulsion laser soient ajustées automatiquement en fonction de la vitesse du procédé, ou

d. la fréquence d'impulsion laser, l'énergie d'impulsion laser et/ou la vitesse d'avance soient ajustées automatiquement en fonction de la ou des propriétés du matériau à séparer.

17. Dispositif selon l'une quelconque des revendications précédentes 10 à 16, **caractérisé par** un moyen de focalisation destiné à focaliser le rayon laser, de préférence avec un système optique ayant une ouverture numérique qui est au moins suffisamment grande pour obtenir une séparation du matériau sous la surface d'un matériau semi-transparent ou entièrement transparent sans que la zone de matériau située au-dessus ou en dessous de la zone de séparation ne soit endommagée.

18. Dispositif selon l'une quelconque des revendications précédentes 10 à 17, **caractérisé par** un dispositif d'observation qui est destiné à observer le processus de séparation et qui interagit avec les moyens de génération d'une séquence d'impulsions laser, les moyens de guidage des impulsions laser sur une zone de matériau à séparer et/ou les moyens d'avance de sorte que, en cas de baisse de la puissance de séparation, l'énergie totale apportée soit augmentée par une modification d'au moins un des paramètres de la revendication 5.

Fig. 1

Fig. 3     Überlappung [%]

Fig. 2

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6787733 B
- US 5656186 A
- EP 0754103 B1
- EP 1284839 A1
- WO 2005037482 A1